# EUROPEAN PATENT APPLICATION

(11) **EP 2 341 713 A2**
(43) Date of publication of application: **06.07.2011**
(21) Application number: 10161764.5
(22) Date of filing: 03.05.2010
(51) Int. Cl.: H04N 13/00

(54) **3D object display method and electric apparatus thereof**

(30) Priority: 31.12.2009 TW 098146321
(71) Applicant: Acer Incorporated, Taipei Hsien 221 (TW)
(72) Inventor: Huang, Wei-Heng, Hsichih, Taipei Hsien 221 (TW); Ko, Chueh-Pin, Hsichih, Taipei Hsien 221 (TW)
(74) Representative: Becker Kurig Straus

(57) **Abstract**

An electric apparatus and a 3D object display method thereof are provided. The 3D object display method is suitable for a 3D monitor having interlaced first display areas and second display areas, and includes the following steps of: displaying a 3D object formed by a first display image and a second display image on the 3D monitor such that the first display image and the second display image are displayed on the first display areas and the second display areas respectively; and adjusting the location or the area size of the 3D object by moving the boundary of the 3D object at least a min moving unit formed by one first display area and one adjacent second display area.

## Description

### FIELD OF THE INVENTION

The exemplary embodiment(s) of the present invention relates to a field of object display method and electronic apparatus thereof. More specifically, the exemplary embodiment(s) of the present invention relates to a 3D object display method and an electronic apparatus thereof.

### BACKGROUND OF THE INVENTION

The visual effect of the conventional 2D windows gradually could not satisfy the need of people. With the progress of technical innovation, 3D windows are developed to bring a whole new three-dimensional visual experience to the users.

There is a pitch about 65mm between the left and the right eyes of human, thus the images of the external world received by the left and the right eyes are slightly different. The plane images received respectively by the left and the right eyes are processed by the brain, so the senses of distance or space of human are created to indentify whether an object is far or near. Therefore, the 3D display technique is developed according to the aforementioned sensations of human.

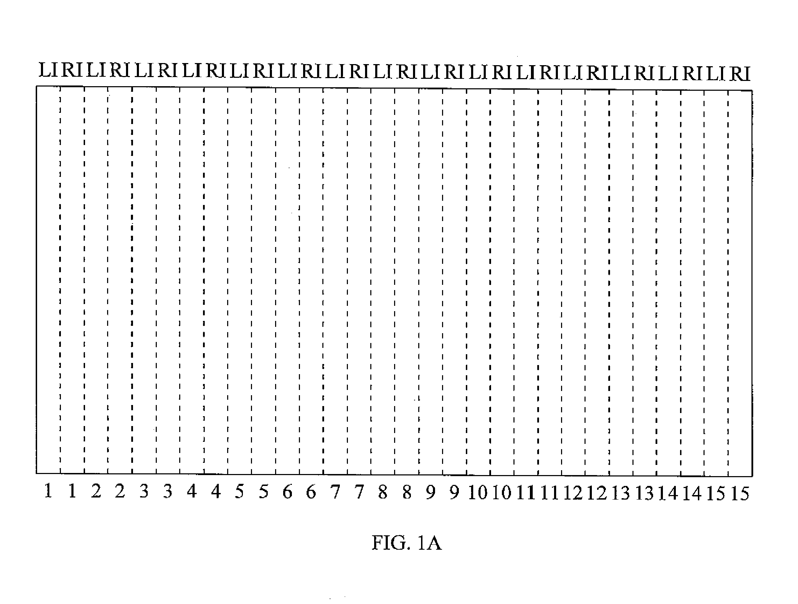

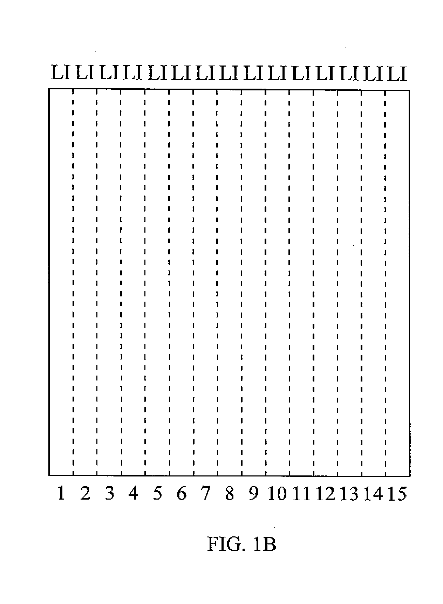

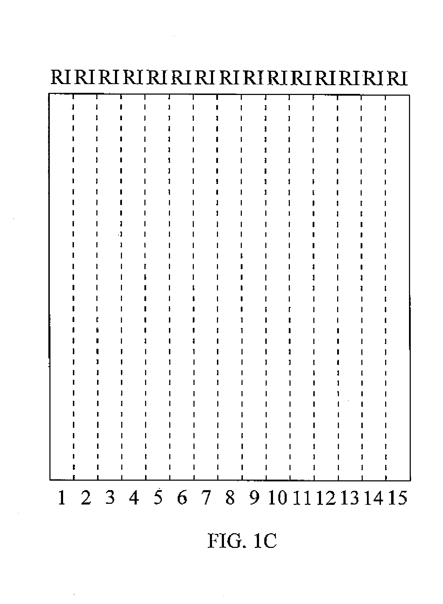

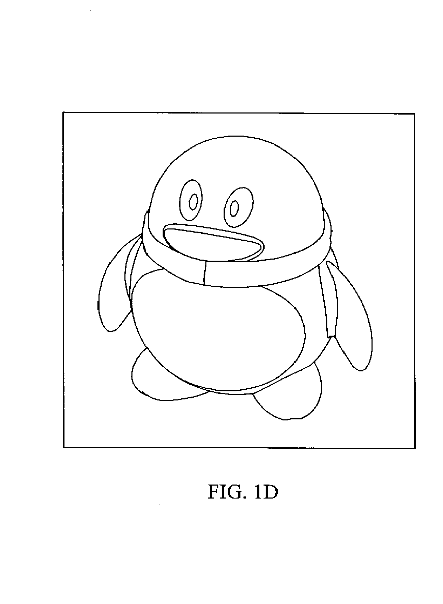

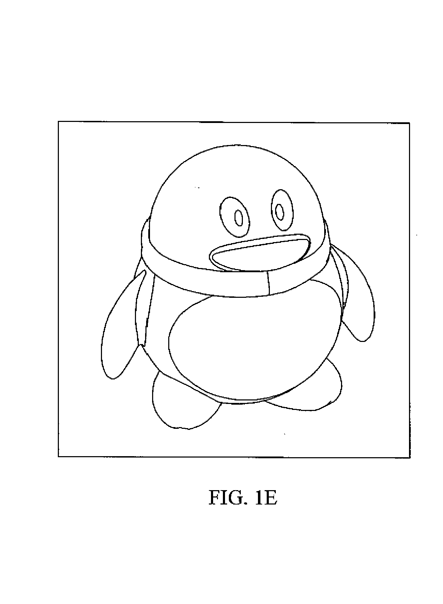

Figure 1A illustrates an illustrative diagram of a conventional 3D image. Figure 1B and figure 1C are two 2D images decomposed from the 3D image in figure 1A. Please refer to figures 1A to 1C, the 2D images illustrated in figures 1B and 1C are respectively provided for the left eye and the right eye of the user corresponding to the view angel of the left eye and the right eye of the user. Examples of more practical and descriptive images are shown in figures 1D and 1E.

When figure 1D (1B) and figure 1E (1C) are received by the left eye and the right eye of the user, the user's brain will combine these two pictures and create a 3D special effect.

In order to achieve the aforementioned effect, the conventional technique first divides the 2D display image shown in figure 1B into several straight left-view images LI, and divides the 2D display image shown in figure 1C into several straight right-view images RI, and finally interlaces these left-view images LI and right-view images RI to form the 3D image as shown in figure 1A.

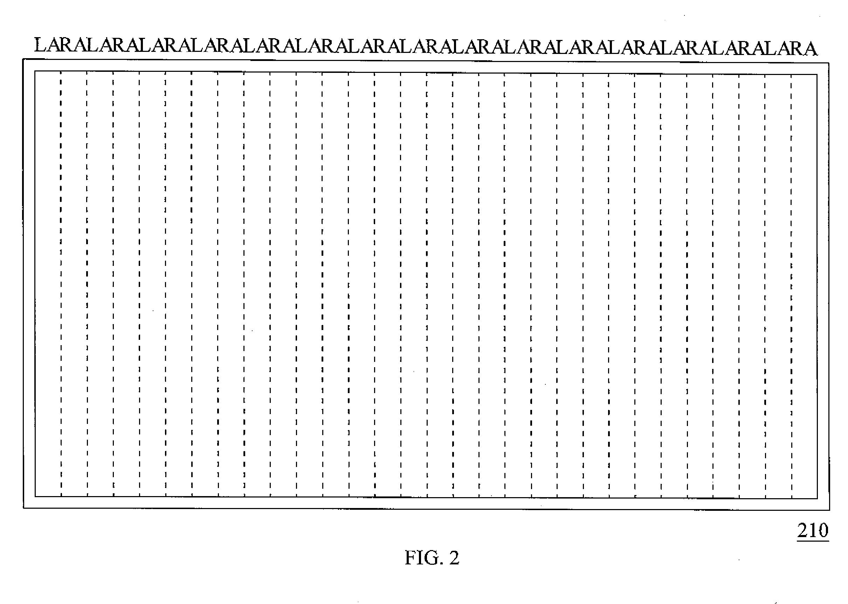

Figure 2 illustrates a front view of a conventional 3D monitor. Please refer to figure 2 and figure 1A, the 3D monitor 210 comprises several column interlaced left-view display areas LA and right-view display areas RA to exhibit the 3D image shown in figure 1A. The left-view display areas LA exhibit the left-view images LI and the right-view display areas RA exhibit the right-view display areas RA respectively.

The left-view images LI exhibited by the left-view display areas LA and the right-view images RI exhibited by the right-view display areas RA could be conveyed respectively to user's left and right eyes by techniques of Micro-retarder, Barrier or Lenticular. Thereby, the illusionary 3D spatial effect may be sensed by the user.

However, the latest 3D display techniques could only be applied on the 3D monitor 210 in full screen, and there are no functions to drag, zoom in or zoom out a common-sized 3D window. Thus the 3D monitor 210 could only show a single 3D image in full screen, and can not meet user's need to handle several 3D windows at the same time.

### SUMMARY OF THE INVENTION

Therefore, one object of the present invention is providing a 3D object display method that allows a user to drag, zoom in or zoom out the 3D objects without producing a ghost effect or error frames, so as to handle a plurality of 3D objects.

In addition, the other object of the present invention is providing an electric apparatus having a 3D monitor that correctly shows the 3D objects after being dragged, zoomed in or zoomed out.

In order to achieve the aforementioned or other objects, the present invention discloses a 3D object display method applicable to a 3D monitor. The 3D monitor comprises a plurality of first display areas being interlaced with a plurality of second display areas, and the first display areas and the second display areas correspond to a user's a first visual sensation area and a second visual sensation area. The 3D object display method comprises the following steps of: displaying a 3D object on the 3D monitor, and the 3D object including a first display image and a second display image being respectively displayed in the first display areas and the second display areas; and adjusting the position or the area size of the 3D object according to a minimum moving unit determined by single first display area and adjacent single second display area.

Wherein the aforementioned first display areas and the second display areas could be row-interlaced, and the upper boundary or the lower boundary of the 3D object could be moved according to the 3D object display method, and the width of each first display area and the width of each second display area are the same with the width of one pixel.

Wherein said first display areas and said second display areas could be column - interlaced, and the 3D object display method could move the left boundary or the right boundary of the 3D object, and the length of each first display areas and the length of each second display areas are the same with the length of one pixel.

In order to achieve the aforementioned or other objects, the present invention discloses an electronic apparatus comprising a 3D monitor, a processing unit and an input interface. The processing unit is electronically connected with the 3D monitor and the input interface. The 3D monitor comprises a plurality of first display areas being interlaced with a plurality of second display areas, and the first display areas and the second display areas correspond to a user's a first visual sensation area and a second visual sensation area. The input interface inputs a 3D object to the processing unit, the 3D object comprises a first display image and a second display image, and the processing unit shows the 3D object on the 3D monitor with the first display image and the second display image being displayed respectively in the first display areas and the second display areas. The processing unit adjusts the position and the area size of the 3D object according to a minimum moving unit determined by single first display area and adjacent single second display area when the input interface transmits a signal to the processing unit to adjust the position and the area size of the 3D object.

Wherein the aforesaid processing unit could be a central processing unit or a micro processing unit.

In summary, according to the present invention of the electronic apparatus and the 3D object display method thereof, the processing unit forces the boundaries of the 3D object being moved with an integral multiple of the minimum moving unit when the user wants to drag, zoom in or zoom out the 3D object. Therefore the 3D object can be correctively displayed on the 3D monitor after being dragged, zoomed in or zoomed out without generating an error situation that the first display image and the second display image are displayed respectively in the second display areas and the first display areas.

With these and other objects, advantages, and features of the invention that may become hereinafter apparent, the nature of the invention may be more clearly understood by reference to the detailed description of the invention, the embodiments and to the several drawings herein.

### BRIEF DESCRIPTION OF THE DRAWINGS

The exemplary embodiment(s) of the present invention will be understood more fully from the detailed description given below and from the accompanying drawings of various embodiments of the invention, which, however, should not be taken to limit the invention to the specific embodiments, but are for explanation and understanding only.
- **Fig. 1A**: illustrates an illustrative diagram of a conventional 3D image;
- **Fig. 1B and 1C**: illustrate illustrative diagrams of two 2D display images decomposed from the 3D image shown in figure 1A;
- **Fig. 1D and 1E**: respectively illustrate real diagrams of figure 1B and figure 1C;
- **Fig. 2**: illustrates a front view of conventional 3D monitor;
- **Fig. 3**: illustrates a block diagram of an electronic apparatus in accordance with one embodiment of the present invention;
- **Fig. 4A**: illustrates a front view of the electronic apparatus shown in figure 3;
- **Fig. 4B**: illustrates an illustrative diagram of a 3D object in accordance with one embodiment of the present invention;
- **Fig. 4C**: illustrates an illustrative diagram of a first display image of the 3D object shown in figure 4B;
- **Fig. 4D**: illustrates an illustrative diagram of a second display image of the 3D object shown in figure 4B;
- **Fig. 4E**: illustrates a front view illustrative diagram of the 3D monitor shown in figure 4A while dragging the 3D object;
- **Fig. 4F**: illustrates a front view illustrative diagram of the 3D monitor shown in figure 4A while zooming in or zooming out the 3D object;
- **Fig. 5A**: illustrates a front view illustrative diagram of the 3D monitor in accordance with one embodiment of the present invention;
- **Fig. 5B**: illustrates an illustrative diagram of the 3D object in accordance with one embodiment of the present invention;
- **Fig. 5C**: illustrates an illustrative diagram of the first display image of the 3D object shown in figure 5B;
- **Fig. 5D**: illustrates an illustrative diagram of the second display image of the 3D object shown in figure 5B;
- **Fig. 5E**: illustrates a front view illustrative diagram of the 3D monitor shown in figure 5A while dragging the 3D object;
- **Fig. 5F**: illustrates a front view illustrative diagram of the 3D monitor shown in figure 5A while zooming in or zooming out the 3D object; and
- **Fig. 6**: illustrates a flow chart of a 3D object display method in accordance with one embodiment of the present invention.

### DETAILED DESCRIPTION OF THE PREFERRED EMBODIMENTS

Exemplary embodiments of the present invention are described herein in the context of a 3D object display method and an electronic apparatus thereof.

Those of ordinary skilled in the art will realize that the following detailed description of the exemplary embodiment(s) is illustrative only and is not intended to be in any way limiting. Other embodiments will readily suggest themselves to such skilled persons having the benefit of this disclosure. Reference will now be made in detail to implementations of the exemplary embodiment(s) as illustrated in the accompanying drawings. The same reference indicators will be used throughout the drawings and the following detailed description to refer to the same or like parts.

In accordance with the embodiment(s) of the present invention, the components, process steps, and/or data structures described herein may be implemented using various types of operating systems, computing platforms, computer programs, and/or general purpose machines. In addition, those of ordinary skill in the art will recognize that devices of a less general purpose nature, such as hardwired devices, field program mable gate arrays (FPGAs), application specific integrated circuits (ASICs), or the like, may also be used without departing from the scope and spirit of the inventive concepts disclosed herein. Where a method comprising a series of process steps is implemented by a computer or a machine and those process steps can be stored as a series of instructions readable by the machine, they may be stored on a tangible medium such as a computer memory device (e.g., ROM (Read Only Memory), PROM (Programmable Read Only Memory), EEPROM (Electrically Erasable Programmable Read Only Memory), FLASH Memory, Jump Drive, and the like), magnetic storage medium (e.g., tape, magnetic disk drive, and the like), optical storage medium (e.g., CD-ROM, DVD-ROM, paper card and paper tape, and the like) and other known types of program memory.

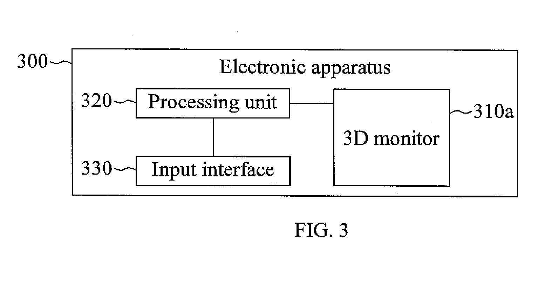

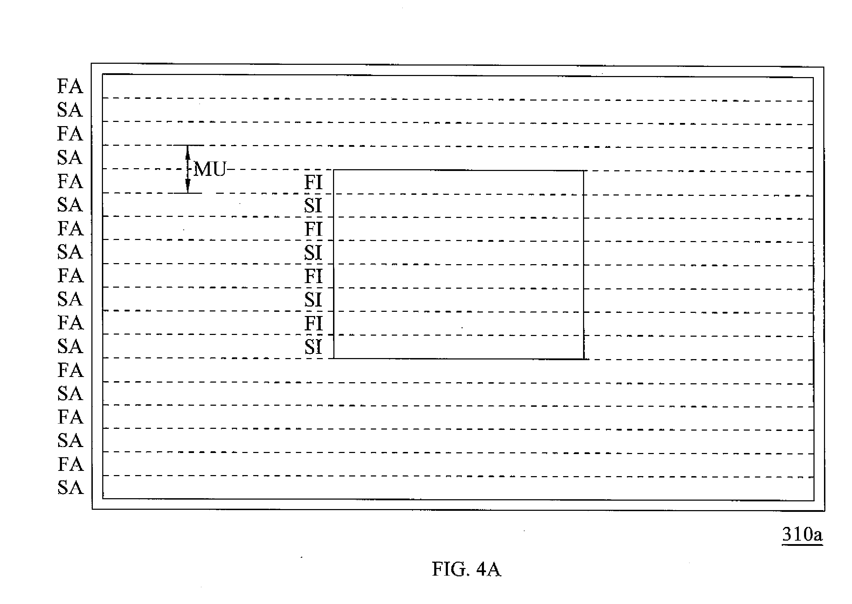

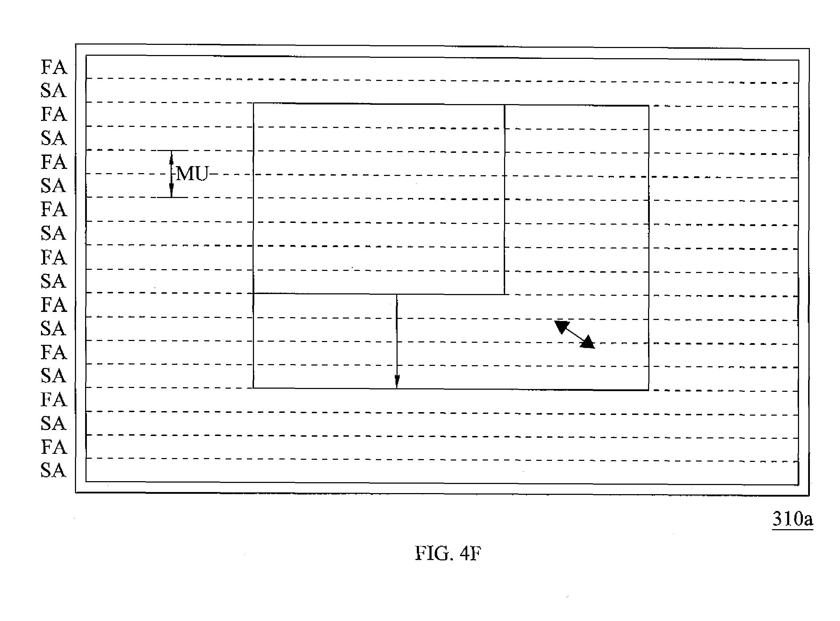

Figure 3 illustrates a block diagram of an electronic apparatus in accordance with one embodiment of the present invention, and figure 4A illustrates a front view of the electronic apparatus shown in figure 3. Please refer to figure 3 and figure 4A, the present invention discloses an electronic apparatus 300 comprising a 3D monitor 310a, a processing unit 320 and an input interface 330. The processing unit 320 is connected respectively to the 3D monitor 310a and the input interface 330.

As mentioned before, the 3D monitor 3 10a including a plurality of first display areas FA interlaced with a plurality of second display areas SA, and the first display areas FA correspond to a user's first visual sensation area, and the second display areas SA correspond to the user's second visual sensation area.

In this embodiment, the first visual sensation area and the second visual sensation area are the user's left eye and right eye respectively, so the content showed in the first display areas FA is transferred to the user's left eye, and the content showed in the second display areas SA is transferred to the user's right eye. However, those of ordinary skilled in the art would change the order of the display areas corresponded to the left and the right eyes.

In addition, in order to understand clearly, the aforementioned first display areas FA and the second display areas SA could be row-interlaced. However, the way that the first display areas FA interlaced with the second display areas SA is not limited in the present invention.

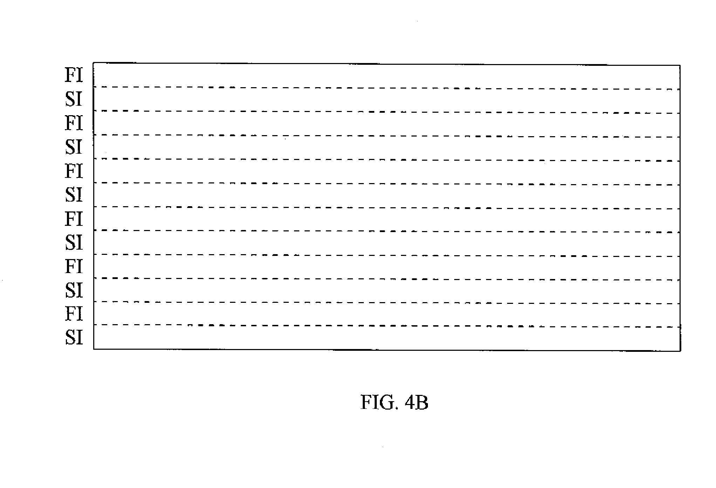

Please again refer to figure 3, the input interface 330 inputs a 3D object to the processing unit 320, and the illustrative diagram of the 3D object is shown in figure 4B. The display size of the 3D object could be different to the full screen size of the 3D monitor 310a. In this embodiment, the 3D object could be a 3D operation system, a 3D application program, a 3D graphical user interface, a 3D icon or a 3D mouse cursor; however, the present invention does not limit the kind of the 3D object.

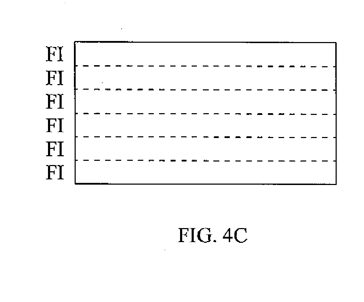

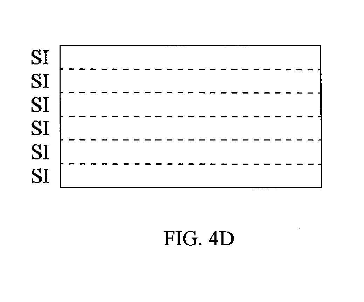

The 3D object comprises a first display image (as shown in figure 4C) and a second display image (as shown in figure 4D), and the first display areas and the second display areas correspond to the user's first visual sensation area and second visual sensation area. Thereby, the illusionary 3D spatial effect may be sensed by the user.

In order to correspond to the row-interlaced 3D monitor 310a, the first display image could be split into a plurality of first visual images FI having transverse-bar shape, and the second display image could be split into a plurality of second visual images SI having transverse-bar shape. The first visual images FI are interlaced with the second visual images SI to form the 3D object shown in figure 4B.

Thus, the processing unit 320 could display the 3D object on the 3D monitor 310a, and the first visual images FI of the first display image are displayed in the first display areas FA, the second visual images SI of the second display image are displayed in the second display areas SA (as shown in figure 4A). In this way, the illusionary 3D spatial effect may be sensed by the user while the first display images and the second display images are being received respectively by the user's left eye and right eye.

When the user wants to drag, zoom in or zoom out the 3D object, the input interface 330 will transmit a signal that adjusts the position or area size of the 3D object to the processing unit 320 to adjust the boundaries of the 3D object. Specifically speaking, a minimum moving unit MU is determined by single first display area FA and the adjacent second display area SA. The processing unit 320 moves the boundaries of the 3D object with an integral multiple of the minimum moving unit MU, thus the first display image and the second display image can be shown respectively in the first display areas FA and the second display areas SA.

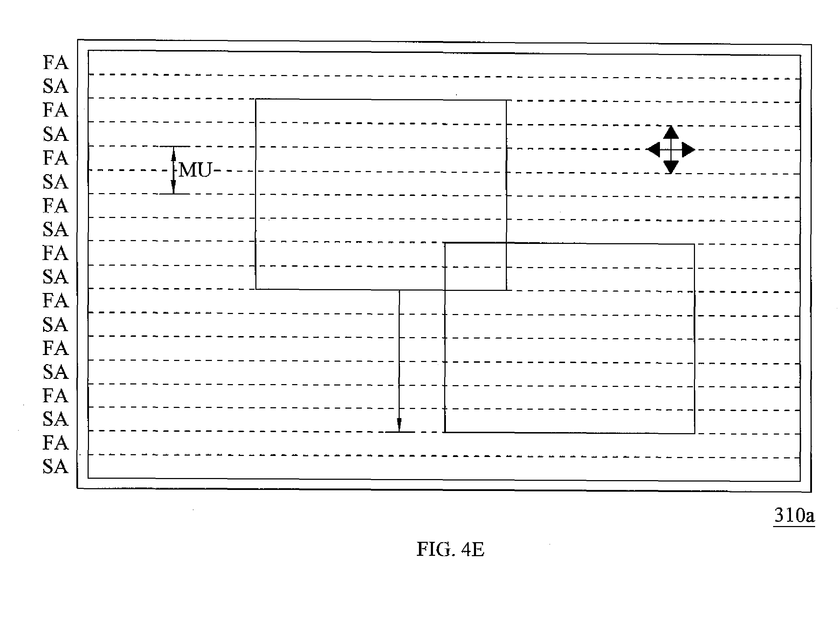

Take figure 4E for an example, which the 3D object is dragged and then moved, the width of the minimum moving unit MU is the sum of the width of the first display areas FA and the second display areas SA, thus the processing unit 320 will limit the upper boundary and the lower boundary just can be moved with an integral multiple of the minimum moving unit MU. In other words, the first display image is still shown in the first display areas FA, and the second display image is still shown in the second display areas SA after moving the 3D object.

Take figure 4E for an example, when the user wants to zoom in the 3D object toward the lower-right corner direction, the processing unit 320 will limit the lower boundary can just be moved with an integral multiple of the minimum moving unit MU, and compute the corresponding pixel values of the first display image and the second display image after being zoomed in, so the first display image is still shown in the first display areas FA and the second display image is still shown in the second display areas SA.

Besides, in the 3D monitor 310a having the first display areas FA interlaced with the second display areas SA, the present invention only limits the location of the upper boundary and the lower boundary of the 3D object, and the left boundary and the right boundary of the 3D object could be moved arbitrarily.

Furthermore, the width of each first display areas FA and the width of each second display areas SA could be the same of the width of single pixel. The single pixel comprises a red sub-pixel, a green sub-pixel and a blue sub-pixel, or even comprises a white sub-pixel. Therefore, the upper boundary and the lower boundary of the 3D object must be adjusted with even multiple of the width of the pixel to ensure the 3D monitor 310a could display correct contains without generating a ghost effect.

Though the concept is described by an example that the 3D monitor 310a is row-interlaced, in order to more clarify the concept, the following description and figures will describe an embodiment wherein the 3D monitor is column-interlaced.

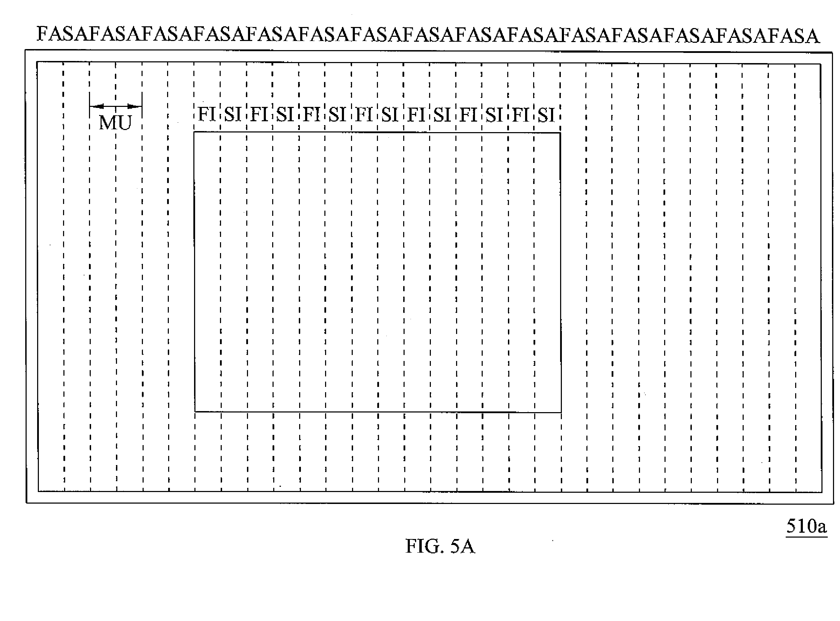

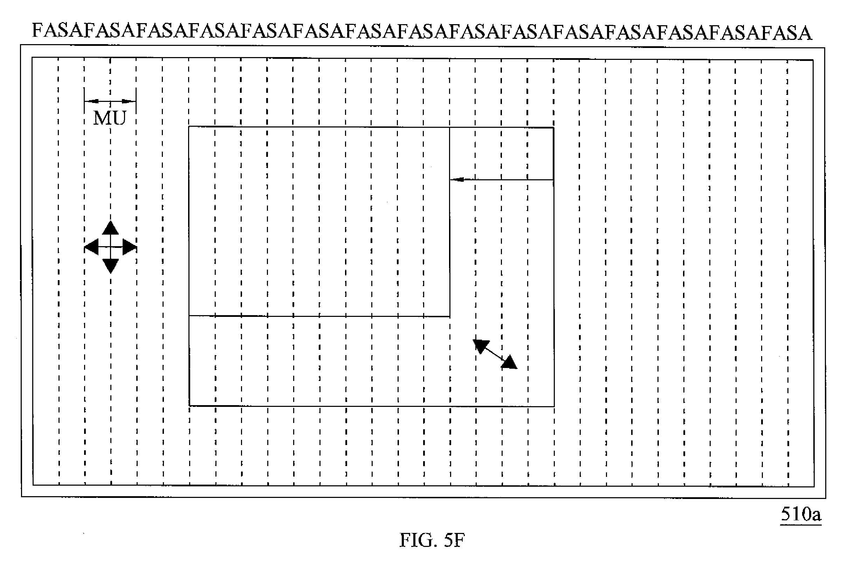

Figure 5A illustrates a front view illustrative diagram of the 3D monitor in accordance with one embodiment of the present invention. Please refer to figure 5A, like the aforementioned, a 3D monitor 510a comprises a plurality of first display areas FA column-interlaced with a plurality of second display areas SA, and the first display areas FA correspond to a user's first visual sensation area, and the second display areas SA correspond to the user's second visual sensation area. Please refer to figure 3 simultaneously, the 3D monitor 310a could be replaced by the 3D monitor 510a in this embodiment.

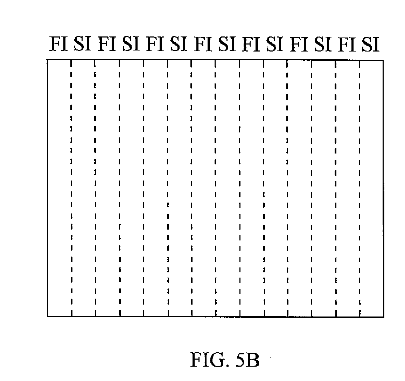

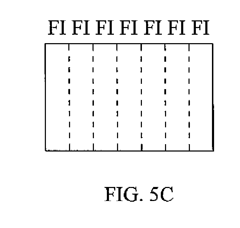

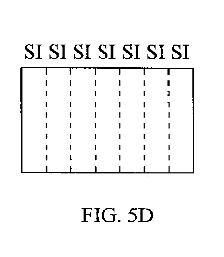

Like the aforementioned, the illustrative diagram of the 3D object input into the processing unit 320 is shown in figure 5B. The 3D object comprises a first display image (as shown in figure 5C) and a second display image (as shown in figure 5D), and the first display areas and the second display areas correspond to the user's first visual sensation area and second visual sensation area, thereby the illusionary 3D spatial effect may be sensed by the user.

In order to correspond to the column-interlaced 3D monitor 510a, the first display image could be split into a plurality of first visual images FI having longitudinal-bar shape, and the second display image could be split into a plurality of second visual images SI having longitudinal-bar shape. The first visual images FI are interlaced with the second visual images SI to form the 3D object shown in figure 5B.

Thus, the processing unit 320 could display the 3D object on the 3D monitor 510a, and the first visual images FI of the first display image are displayed in the first display areas FA, the second visual images SI of the second display image are displayed in the second display areas SA (as shown in figure 5A). In this way, the illusionary 3D spatial effect may be sensed by the user while the first display images and the second display images are being received respectively by the user's left eye and right eye.

When the user wants to drag, zoom in or zoom out the 3D object, the input interface 330 will transmit a signal that adjusts the position or area size of the 3D object to the processing unit 320 to adjust the boundaries of the 3D object. Specifically speaking, a minimum moving unit MU is determined by single first display areas FA and the adjacent second display areas SA. The processing unit 320 moves the boundaries of the 3D object with an integral multiple of the minimum moving unit MU, thus the first display image and the second display image can be shown respectively in the first display areas FA and the second display areas SA.

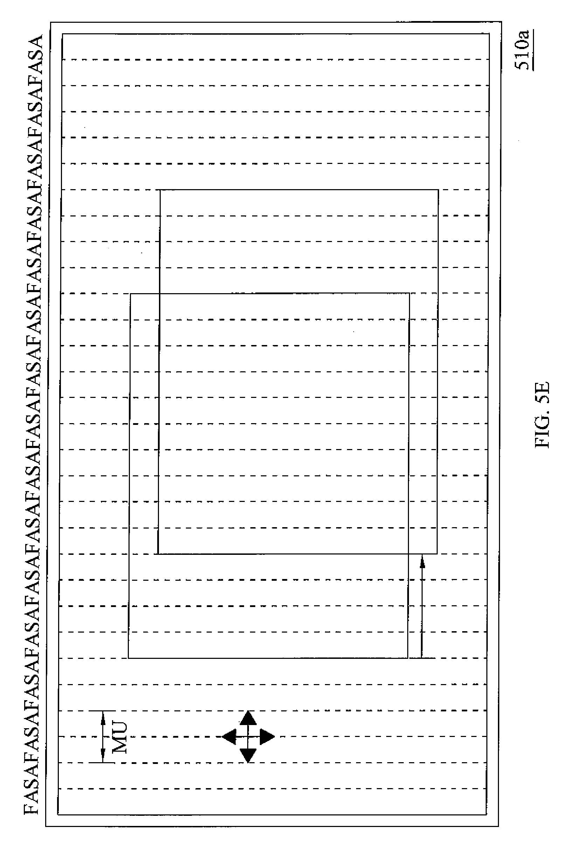

Take figure 5E for an example, which the 3D object is dragged and then moved, the length of minimum moving unit MU is the sum of the length of the first display areas FA and the second display areas SA, thus the processing unit 320 would limit the left boundary and the right boundary just could be moved with an integral multiple of the minimum moving unit MU. In other words, the first display image is still shown in the first display areas FA, and the second display image is still shown in the second display areas SA after moving the 3D object.

Take figure 5E for an example, when the user wants to zoom out the 3D object toward the upper-left corner direction, the processing unit 320 would limit the right boundary could just be moved with an integral multiple of the minimum moving unit MU, and compute the corresponding pixel values of the first display image and the second display image after being zoomed out, so the first display image is still shown in the first display areas FA and the second display image is still shown in the second display areas SA.

Besides, in the 3D monitor 510a having the first display areas FA interlaced with the second display areas SA, the present invention only limits the location of the left boundary and the right boundary of the 3D object, and the upper boundary and the lower boundary of the 3D object could be moved arbitrarily.

Furthermore, the length of each first display areas FA and the length of each second display areas SA could be the same as the length of single pixel. The left boundary and the right boundary of the 3D object must be adjusted with even multiple of the length of the pixel to ensure the 3D monitor 510a could display correct contains without generating an error display effect.

In the aforementioned embodiments, if the 3D monitor 310a generates the first display areas FA and the second display areas SA as two orthogonal polarized lights by the micro-phase difference film technology, the user's left eye and right eye can only see the images generated by the first display areas FA and the second display areas SA respectively when the user wear a corresponding polarized glasses.

Furthermore, the 3D monitor 510a could use the barrier or lenticular technology to generate 3D display effect so the user does not need to wear special glasses. However, the present invention does not limit the kind of 3D monitor or the display method. For example, the first display areas and the second display areas of the 3D monitor could be interlaced with a 45 degree angle. Additionally, the aforementioned processing unit 320 could be a central processing unit or a micro processing unit, and the present invention also does not limit the processing unit 320.

It is worth to be noticed that though the concept of the present invention is described with single 3D object, those of ordinary skilled in the art surely can understand and extend to a plurality of 3D objects easily, so as to let the user handling several 3D object simultaneously. Besides, the background window could be 3D or 2D, it means that the aforementioned 3D object could be in the 3D background or 2D background, and it all dependants on the user's setting.

The concept of the 3D object display method in accordance to the present invention is simultaneously described in the description of the electronic apparatus disclosed in the present invention, but in order to get clearer, the flowing will still illustrate the flow chart of the 3D object display method.

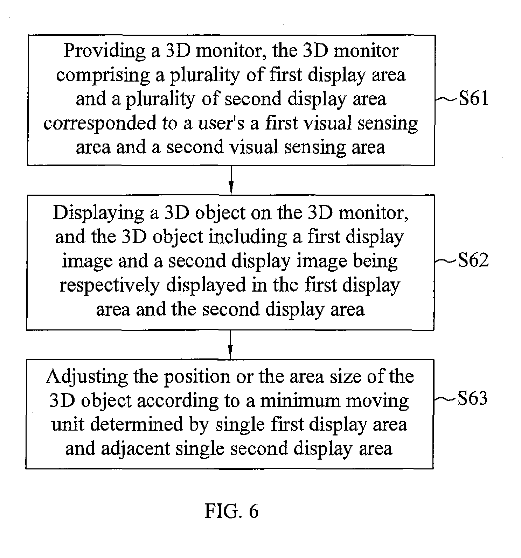

Figure 6 illustrates a flow chart of a 3D object display method in accordance with one embodiment of the present invention. Please refer to figure 6, the 3D object display method comprises the follow steps of: (S61) providing a 3D monitor, the 3D monitor comprising a plurality of first display areas and a plurality of second display areas corresponded to a user's a first visual sensation area and a second visual sensation area; (S62) displaying a 3D object on the 3D monitor, and the 3D object including a first display image and a second display image being respectively displayed in the first display areas and the second display areas; and (S63) adjusting the position or the area size of the 3D object according to a minimum moving unit determined by single first display area and adjacent single second display area.

Certainly, the 3D monitor could be the aforementioned 3D monitor 310a, 3D monitor 510a or any other 3D monitor which has the same concept of the present invention.

In summary, the electronic apparatus and the 3D object display method thereof have at least the following advantages:

1. The present invention overcomes the problem of conventional skills which just can show the 3D images in full screen, and develops a non-full screen 3D object display method.

2. The present invention forces the boundaries of the 3D object being moved with an integral multiple of the minimum moving unit, so the 3D object can be correctively displayed on the 3D monitor after being dragged, zoomed in or zoomed out without generating a ghost effect or other error situation.

While particular embodiments of the present invention have been shown and described, it will be obvious to those skilled in the art that, based upon the teachings herein, changes and modifications may be made without departing from this invention and its broader aspects. Therefore, the appended claims are intended to encompass within their scope of all such changes and modifications as are within the true spirit and scope of the exemplary embodiment(s) of the present invention.

## Claims

1. A 3D object display method applicable to a 3D monitor (310a, 510a), the 3D monitor (310a, 510a) comprising a plurality of first display areas (FA) being interlaced with a plurality of second display areas (SA), and the first display areas (FA) and the second display areas (SA) corresponding to a user's a first visual sensation area and a second visual sensation area, the 3D object display method comprising the steps of
displaying a 3D object on the 3D monitor (310a, 510a), the 3D object including a first display image and a second display image being respectively displayed in the first display areas (FA) and the second display areas (SA); and
adjusting the position or the area size of the 3D object according to a minimum moving unit (MU) determined by single first display area and adjacent single second display area.

2. The 3D object display method of claim 1, wherein the first display areas (FA) and the second display areas (SA) are row-interlaced.

3. The 3D object display method of claim 2, wherein the upper boundary or the lower boundaries of the 3D object are moved with the minimum moving unit (MU).

4. The 3D object display method of claim 2 or 3, wherein the width of each first display area and the width of each second display area are the same as the width of one pixel.

5. The 3D object display method of one of claims 1 to 4, wherein the first display areas (FA) and the second display areas (SA) are column-interlaced.

6. The 3D object display method of claim 5, wherein the left boundary or the right boundaries of the 3D object are moved with the minimum moving unit (MU).

7. The 3D object display method of one of claims 1 to 6, when in the step of adjusting the position or the area size of the 3D object according to a minimum moving unit (MU) determined by single first display area and adjacent single second display area, the first display image and the second display image are still shown in the first display areas (FA) and the second display areas (SA) respectively.

8. The 3D object display method of one of claims 1 to 7, wherein the 3D object is a 3D window, a 3D icon, a 3D operation system, a 3D graphical user interface, a 3D application program or a 3D mouse cursor.

9. An electronic apparatus (300), comprising:
a 3D monitor (310a, 510a) comprising a plurality of first display areas (FA) being interlaced with a plurality of second display areas (SA), and the first display areas (FA) and the second display areas (SA) correspond to a user's a first visual sensation area and a second visual sensation area;
a processing unit (320) being electrically connected to the 3D monitor (310a,
510a); and
an input interface (330) being electrically connected to the processing unit (320) to input a 3D object into the processing unit (320), the 3D object comprising a first display image and a second display image, and the processing unit (320) shows the 3D object on the 3D monitor (310a, 510a) with the first display image and the second display image being displayed respectively in the first display areas (FA) and the second display areas (SA);
wherein the processing unit (320) adjusts the position and the area size of the 3D object according to a minimum moving unit (MU) determined by single first
display area and adjacent single second display area when the input interface (330) transmits a signal to the processing unit (320) to adjust the position and the area size of the 3D object.

10. The electronic apparatus (300) of claim 9, wherein the first display areas (FA) and the second display areas (SA) are row-interlaced.

11. The electronic apparatus (300) of claim 10, wherein the upper boundary or the lower boundaries of the 3D object are moved with the minimum moving unit (MU) by the processing unit (320).

12. The electronic apparatus (3 00) of claim 10 or 11, wherein the width of each first display area and the width of each second display area are the same as the width of one pixel.

13. The electronic apparatus (300) of one of claims 9 to 12, wherein the first display areas (FA) and the second display areas (SA) are column-interlaced.

14. The electronic apparatus (3 00) of claim 13, wherein the left boundary or the right boundaries of the 3D object are moved with the minimum moving unit (MU) by the processing unit (320).

15. The electronic apparatus (300) of one of claims 9 to 14, wherein the first display image and the second display image corresponded to the 3D object after being adjusted the position and the area size of the 3D object are still shown in the first display areas (FA) and the second display areas (SA) respectively.
